# EUROPEAN PATENT APPLICATION

(11) **EP 1 112 944 A1**
(43) Date of publication of application: **04.07.2001**
(21) Application number: 99910080.3
(22) Date of filing: 26.03.1999
(51) Int. Cl.: B65D 65/46, B65D 1/00, C08L 97/02, A47G 19/03, B27N 5/00

(54) **DINNER WARE OR PACKAGING ELEMENTS FOR FOODSTUFF AND ARTICLES MADE FROM PLANT FIBER AS WELL AS A METHOD FOR MAKING THEM**

(30) Priority: 27.03.1998 CN 98111212
(71) Applicant: Jiang, Jianguo, Baipu Town, Rugao City, Jiangsu Province 226511 (CN)
(72) Inventor: Jiang, Jianguo, Baipu Town, Rugao City, Jiangsu Province 226511 (CN)
(74) Representative: Viering, Jentschura & Partner
(86) International application number: CN9900039
(87) International publication number: WO9950151

(57) **Abstract**

The invention relates to dinner ware or packaging elements for foodstuff and articles made from plant fiber. The products are made from a number of raw materials including plant fiber and adhesive. The raw materials are made up by 60-74% of plant stalk or straw and 26-40% of the adhesive comprising starch type of raw materials and the drawing agent. The formed products are coated with waterproof agent. The invention has the following advantages. Raw materials and auxiliary materials are natural, abundant and cheap. The products are with no pollution to the environment.

## Description

### Field of the Invention

The invention relates to dinner ware or packaging elements for foodstuff and articles made from plant fiber.

### Background of the Invention

Most of disposable dinner wares in the market are made of plastics and are discarded after being used. These products are hard to be recovered and degraded, which brings about great pollution to the natural scenery, water and soil. Some of the machinery products and home appliances were unable to enter the international markets due to using foam plastics. Therefore, new degradable inner package and filling materials are required to replace the old ones. On the other hand, some of the agricultural plants, flowers and trees require control of growth during the breeding period. If suitable vessels are used for further transplant, a lot of manpower and time can be saved so as to accelerate the growth of the flowers or crops.

The object of the invention is to provide a kind of clean, degradable dinner ware or packaging elements for foodstuff and articles made from plant fiber, which may be used as fertilizer or feedstuffs after being collected, which is cost-effective, rich of raw materials and may fully utilize agricultural resources. The products may also be widely used as packing materials of other articles.

### Summary of the Invention

Technical solution of the invention is as follows:

This invention provides with dinner ware or packaging elements for foodstuff and articles made from plant fiber. The products are made from a number of raw materials including plant fiber and adhesive. The raw materials are made up by 60-74% of plant stalk or straw and 26-40% of the adhesive comprising starch type of raw materials and demolding or drawing agent. The formed products are coated with waterproof agent.

Preferably, the plant stalk is selected from at least one of straw, wheat stalk, bulrush, sugarcane dregs, cotton stalk, and corn stalk.

Preferably, the demolding agent is edible oil.

Preferably, the waterproof agent includes PVB resin, edible ethanol, butanol, ordinary glue, and seaweed, etc.

Preferably, the starch type of raw materials shall be at least one of pure starch, flour, dextrin, etc.

Preferably, the dinner wares and packing products include bowl, dishes, fast food dinner ware, drinking cup, spoon, chopstick, pots and packing or filling materials for industrial machinery, home appliance, electronic products as well as vessels for seedlings of flower, cotton, corn and vegetables.

Preferably, the starch type of raw material in the adhesive is 25 - 33% and the demolding agent is 1 - 7%.

The invention has the following benefits. Raw materials and auxiliary materials are the natural ones without matter harmful to human beings, livestocks and soil. The raw materials are abundant, cheap and easy to produce. It will also benefit for utilization of agricultural resources. There will be no pollution during production. The products will degrade naturally in 1-8 weeks after being discarded. The degraded matter may be used as fertilizer, which is advantageous for ecology with no pollution to the environment. If the products are used as plantation wares, they will help the growth of the crops so that more crops can survive.

### Detailed Description of the Preferred Embodiments

The followings are detailed descriptions of the invention with reference to the embodiments.

### Embodiment 1:

Food packing products, which may be collected as feedstuffs after being discarded, are produced with the following steps:
1) break fiber of raw material comprising plant stalk (including at least one of straw, wheat stalk, bulrush, sugarcane dregs, cotton stalk and corn stalk) with a breaker to obtain straw powder;
2) take 95% (in terms of weight) of the straw powder and 5% of adhesive ( including about 4% of starch and about 1% of edible oil (such as bean oil or rape oil) as a drawing or demolding agent);
3) feed the straw powder and the adhesive into an agitator and mix them evenly;
4) pour the mixture into a mould or die, the temperature of which is between 120°C - 240°C and the pressure of which is 8 - 15MPa;
5) pressurize the mixture in the mould and keep the pressure for about 50 seconds, then take out the formed products;
6) coat the products with waterproof agent comprising PVB resin, edible ethanol, ordinary glue, butanol or seaweed, etc.;
7) put the products into an oven for drying and sterilizing so as to obtain finished products.

### Embodiment 2 :

Food packing products, which may be collected as feedstuffs after being discarded, are produced with the following steps:
1) break fiber of raw material comprising plant stalk (including at least one of straw, wheat stalk, bulrush, sugarcane dregs, cotton stalk and corn stalk) with a breaker to obtain straw powder;
2) take 80% (in terms of weight) of the straw powder and 20% of adhesive ( including about 17% of starch and about 3% of edible oil as a drawing agent);
3) feed the straw powder and the adhesive into an agitator and mix them evenly;
4) pour the mixture into a mould or die, the temperature of which is between 80°C - 180°C and the pressure of which is 5 - 10MPa;
5) pressurize the mixture in the mould and keep the pressure for about 40 seconds, then take out the formed products;
6) coat the products with waterproof agent as mentioned in the above embodiment 1;
7) put the products into an oven for drying and sterilizing so as to obtain finished products.

### Embodiment 3:

Food packing products, which may be collected as feedstuffs after being discarded, are produced with the following steps:
1) break fiber of raw material comprising plant stalk (including at least one of straw, wheat stalk, bulrush, sugarcane dregs, cotton stalk and corn stalk) with a breaker to obtain straw powder;
2) take 70% (in terms of weight) of the straw powder and 30% of adhesive ( including about 25% of starch and about 5% of edible oil as a drawing agent);
3) feed the straw powder and the adhesive into an agitator and mix them evenly;
4) pour the mixture into a mould or die, the temperature of which is between 30°C - 100°C and the pressure of which is 0.5 - 5MPa;
5) pressurize the mixture in the mould and keep the pressure for about 10 seconds, then take out the formed products;
6) coat the products with waterproof agent as mentioned in the above embodiment 1;
7) put the products into an oven for drying and sterilizing so as to obtain finished products.

### Embodiment 4:

Instant noodle bowls, which may be collected as feedstuffs after being discarded, are produced with the following steps:
1) break fiber of raw material comprising plant stalk (including at least one of straw, wheat stalk, bulrush, sugarcane dregs, cotton stalk and corn stalk) with a breaker to obtain straw powder;
2) take 70% (in terms of weight) of the straw powder and 30% of adhesive ( including about 26% of starch and about 4% of edible oil as a drawing agent);
3) feed the straw powder and the adhesive into an agitator and mix them evenly;
4) pour the mixture into a mould or die, the temperature of which is between 100°C - 200°C and the pressure of which is 7 - 12MPa;
5) pressurize the mixture in the mould and keep the pressure for about 45 seconds, then take out the formed products;
6) coat the products with waterproof agent as mentioned in the above embodiment 1;
7) put the products into an oven for drying and sterilizing so as to obtain finished products.

### Embodiment 5:

Fast food wares, which may be collected as feedstuffs after being discarded, are produced with the following steps:
1) break fiber of raw material comprising plant stalk (including at least one of straw, wheat stalk, bulrush, sugarcane dregs, cotton stalk and corn stalk) with a breaker to obtain straw powder;
2) take 80% (in terms of weight) of the straw powder and 20% of adhesive (including about 17% of starch and about 3% of edible oil as a drawing agent);
3) feed the straw powder and the adhesive into an agitator and mix them evenly;
4) pour the mixture into a mould or die, the temperature of which is between 60°C - 120°C and the pressure of which is 3 - 8MPa;
5) pressurize the mixture in the mould and keep the pressure for about 1 minute, then take out the formed products;
6) coat the products with waterproof agent as mentioned in the above embodiment 1;
7) put the products into an oven for drying and sterilizing so as to obtain finished products.

With this invention, the food packing materials, fast noodle or fast food wares can be recovered after being used, and can be used as feedstuffs for animals, live stocks or fishes after being sterilized and crushed.

If the products of this invention are used as packing materials for home appliances, there is no need to be sterilized. Also, other demolding agent and waterproof agent such as cotton oil, tung oil and other available ordinary waterproof glue may be used.

While the invention has been described with reference to the preferred embodiments, it should be understood that many modifications or changes can be made by the skilled in the without going beyond the scope of this invention. Thus, the protection scope of this invention should be defined by the appended claims.

## Claims

1. Dinner ware or packaging elements for foodstuff and articles made from plant fiber, which are made from a number of raw materials including plant fiber and adhesive, **characterized in that**, said raw materials are made up by 60-74% of plant stalk and 26-40% of the adhesive comprising starch type of raw materials and demolding or drawing agent, the formed products are coated with waterproof agent.

2. Dinner ware or packaging elements for foodstuff and articles made from plant fiber according to claim 1, wherein said plant stalk is selected from at least one of straw, wheat stalk, bulrush, sugarcane dregs, cotton stalk, and corn stalk.

3. Dinner ware or packaging elements for foodstuff and articles made from plant fiber according to claim 1, wherein said demolding agent is edible oil.

4. Dinner ware or packaging elements for foodstuff and articles made from plant fiber according to claim 1, wherein said waterproof agent includes PVB resin, edible ethanol, butanol, ordinary glue, and seaweed, etc.

5. Dinner ware or packaging elements for foodstuff and articles made from plant fiber according to claim 1 or 2, wherein said starch type of raw materials shall be at least one of the pure starch, flour, dextrin, etc.

6. Dinner ware or packaging elements for foodstuff and articles made from plant fiber according to claim 1 or 2, wherein the dinner wares and packing products include bowl, dishes, fast food dinner ware, drinking cup, spoon, chopstick, pots and packing or filling materials for industrial machinery, home appliance, electronic products as well as the vessels for seedlings of flower, cotton, corn and vegetables.

7. Dinner ware or packaging elements for foodstuff and articles made from plant fiber according to claim 1 or 2, wherein the starch type of raw material in the adhesive is 25 - 33% and the demolding agent is 1 - 7%.
